# EUROPEAN PATENT APPLICATION

(11) **EP 4 620 569 A1**
(43) Date of publication of application: **24.09.2025**
(21) Application number: 23891412.1
(22) Date of filing: 07.11.2023
(51) Int. Cl.: B01J 35/57, B01D 53/94, B01J 27/053, F01N 3/022, F01N 3/24, F01N 3/28, F01N 3/035

(54) **EXHAUST GAS PURIFICATION DEVICE**

(30) Priority: 14.11.2022 JP 2022181644
(71) Applicant: TOYOTA JIDOSHA KABUSHIKI KAISHA, Toyota-shi Aichi 471-8571 (JP); CATALER CORPORATION, Kakegawa-shi, Shizuoka 437-1492 (JP)
(72) Inventor: NAKAHIGASHI Seiji, Toyota-shi, Aichi 471-8571 (JP); SUGIURA Koji, Toyota-shi, Aichi 471-8571 (JP); IKEBE Masatoshi, Kakegawa-shi, Shizuoka 437-1492 (JP); OTA Takaya, Kakegawa-shi, Shizuoka 437-1492 (JP); MORISHIMA Takeshi, Kakegawa-shi, Shizuoka 437-1492 (JP); HARADA Eiji, Kakegawa-shi, Shizuoka 437-1492 (JP)
(74) Representative: J A Kemp LLP
(86) International application number: PCT/JP2023/039963
(87) International publication number: WO 2024/106260

(57) **Abstract**

Provided is an exhaust gas purification device that can suppress an increase in pressure loss. An exhaust gas purification device of the present disclosure includes a honeycomb substrate and an inflow cell side catalyst. The honeycomb substrate includes a porous partition wall defining a plurality of cells extending from an inflow side end surface to an outflow side end surface. The plurality of cells include an inflow cell and an outflow cell adjacent across the partition wall. The inflow cell has an open inflow side end and a sealed outflow side end. The outflow cell has a sealed inflow side end and an open outflow side end. The inflow cell side catalyst is disposed at least one of on a partition wall surface on the inflow cell side or in a partition wall inner region on the inflow cell side in an inflow cell side catalyst region of the partition wall. When a position at 50% of a length of the inflow cell side catalyst region from the inflow side end of the partition wall along the extending direction is set to a reference position, at the reference position, a proportion of a region of the partition wall covered with the inflow cell side catalyst in a plan view of the partition wall surface on the inflow cell side of the partition wall is in a range of 50% or more and 95% or less.

## Description

### Technical Field

The present disclosure relates to an exhaust gas purification device that includes a catalyst in a filter having a wall flow structure.

### Background Art

Exhaust gas discharged from an internal combustion engine in, for example, an automobile contains particulate matter (PM, hereinafter abbreviated as "PM" in some cases) containing carbon, which causes air pollution, as a main component, ash as a non-combustible component, and the like. As a filter to trap and remove the PM from the exhaust gas, a filter having a wall flow structure has been widely used.

The filter having a wall flow structure usually includes a honeycomb substrate. The honeycomb substrate includes a porous partition wall defining a plurality of cells extending from an inflow side end surface to an outflow side end surface, and the plurality of cells include inflow cells and outflow cells adjacent across the partition wall. The inflow cell has an open inflow side end and a sealed outflow side end, and the outflow cell has a sealed inflow side end and an open outflow side end. In view of this, the exhaust gas flowing into the inflow cell from the inflow side end passes through the partition wall to flow into the outflow cell, thus being discharged from the outflow side end of the outflow cell. When the exhaust gas passes through the partition wall, the PM is accumulated in voids present in the partition wall. As the filter having a wall flow structure, for example, a diesel particulate filter (DPF) for diesel engines and a gasoline particulate filter (GPF, hereinafter abbreviated as "GPF" in some cases) for gasoline engines have been known.

Meanwhile, in addition to the PM, the exhaust gas contains harmful components, such as carbon monoxide (CO), hydrocarbons (HC), and nitrogen oxides (NOx). The harmful components can be removed from the exhaust gas by a filter over which a catalyst, such as a noble metal catalyst, is applied. Recently, to remove both the PM and the harmful components from the exhaust gas, an exhaust gas purification device including a catalyst in a filter having a wall flow structure has been used.

As such an exhaust gas purification device, for example, an exhaust gas purification device described in Patent Literature 1 has been known. The exhaust gas purification device includes an upstream catalyst layer disposed inside a partition wall and arranged in an upstream portion (inflow side portion) of a substrate including an exhaust gas inflow end section and a downstream catalyst layer disposed inside the partition wall and arranged in a downstream portion (outflow side portion) of the substrate including an exhaust gas outflow end section. In the exhaust gas purification device, the upstream catalyst layer and the downstream catalyst layer contain at least one noble metal of Pt, Pd, or Rh, and the noble metal species contained in the upstream catalyst layer is different from the noble metal species contained in the downstream catalyst layer. The coating amount of the upstream catalyst layer per liter of the substrate volume is smaller than that of the downstream catalyst layer. The coating amount of the upstream catalyst layer per liter of the substrate volume is 60 g/L or more and less than 100 g/L, and the upstream catalyst layer is formed in a portion corresponding to 20% to 80% of the length of the substrate.

### Citation List

### Patent Literature

Patent Literature 1: JP 2016-78016 A

### Summary of Invention

### Technical Problem

In the exhaust gas purification device that includes a catalyst in a filter having a wall flow structure, it has been known that it is effective to arrange the catalyst by wash coating on the inflow side of the partition wall in order to secure exhaust gas purification performance and improve PM trap performance by pores of the catalyst by wash coating. In view of this, for example, as represented by the exhaust gas purification device described in Patent Literature 1, by appropriately configuring the catalyst arranged on the inflow side of the partition wall, properties, such as exhaust gas purification performance, PM trap performance, and pressure loss, can be improved.

In response to fuel consumption regulations that have become stricter than before in various regions of the world, in addition to electrification, various efforts are being made for internal combustion engines. One of them is the downsizing of displacement, and demand is growing for reducing the back pressure of the exhaust system because of the need to improve the output per displacement. Under such circumstances, the exhaust gas purification device that includes a catalyst in a filter having a wall flow structure is required to reduce pressure loss while maintaining exhaust gas purification performance and PM trap performance. However, when the catalyst is arranged on the inflow side of the partition wall as conventionally done, there is a problem that the influence of an increase in pressure loss is large.

The present disclosure has been made in view of these points, and an object of which is to provide an exhaust gas purification device that can suppress an increase in pressure loss.

### Solution to Problem

To solve the above-described problem, an exhaust gas purification device of the present disclosure is an exhaust gas purification device comprising a honeycomb substrate and an inflow cell side catalyst. The honeycomb substrate includes a porous partition wall defining a plurality of cells extending from an inflow side end surface to an outflow side end surface. The plurality of cells include an inflow cell and an outflow cell adjacent across the partition wall. The inflow cell has an open inflow side end and a sealed outflow side end. The outflow cell has a sealed inflow side end and an open outflow side end. The inflow cell side catalyst is disposed at least one of on a partition wall surface on the inflow cell side or in a partition wall inner region on the inflow cell side in an inflow cell side catalyst region extending from an inflow side end of the partition wall along an extending direction up to a position apart by a predetermined distance. When a position at 50% of a length of the inflow cell side catalyst region from the inflow side end of the partition wall along the extending direction is set to a reference position, at the reference position, a proportion of a region of the partition wall covered with the inflow cell side catalyst in a plan view of the partition wall surface on the inflow cell side of the partition wall is in a range of 50% or more and 95% or less.

The present description includes part or all of the contents as disclosed in the description and/or drawings of Japanese Patent Application No. 2022-181644, which is a priority document of the present application.

### Advantageous Effects of Invention

The exhaust gas purification device of the present disclosure can suppress an increase in pressure loss.

### Brief Description of Drawings

Fig. 1 is a perspective view schematically illustrating an exhaust gas purification device according to a first embodiment.
Fig. 2 is a cross-sectional view schematically illustrating a main part of a cross-sectional surface parallel to an extending direction of cells in the exhaust gas purification device according to the first embodiment.
Fig. 3 is a cross-sectional view schematically illustrating an exemplary structure that has an inflow cell side catalyst disposed on a partition wall surface on an inflow cell side in an inflow cell side catalyst region of the partition wall and is different from the structure of the first embodiment.
Fig. 4 is a cross-sectional view schematically illustrating an exemplary structure that has the inflow cell side catalyst disposed on the partition wall surface on the inflow cell side in the inflow cell side catalyst region of the partition wall and is different from the structure of the first embodiment.
Fig. 5A is a cross-sectional view schematically illustrating a main part of a cross-sectional surface parallel to an extending direction of cells in a modification of the exhaust gas purification device according to the first embodiment.
Fig. 5B is a cross-sectional view schematically illustrating a main part of a cross-sectional surface parallel to the extending direction of cells in a modification of the exhaust gas purification device according to the first embodiment.
Fig. 6A is an image, taken with an SEM, of a cross-sectional surface perpendicular to the extending direction at a reference position in the extending direction of the partition wall in an exhaust gas purification device of Example 1.
Fig. 6B is an image, taken with an SEM, of a cross-sectional surface perpendicular to the extending direction at the reference position in the extending direction of the partition wall in an exhaust gas purification device of Example 2.
Fig. 7A is an image, taken with an SEM, of a cross-sectional surface perpendicular to the extending direction at the reference position in the extending direction of the partition wall in an exhaust gas purification device of Comparative Example 1.
Fig. 7B is an image, taken with an SEM, of a cross-sectional surface perpendicular to the extending direction at the reference position in the extending direction of the partition wall in an exhaust gas purification device of Comparative Example 2.
Fig. 7C is an image, taken with an SEM, of a cross-sectional surface perpendicular to the extending direction at the reference position in the extending direction of the partition wall in an exhaust gas purification device of Comparative Example 3.
Fig. 8A is a process drawing that schematically describes a procedure for determining a coverage of the inflow cell side catalyst at the reference position in the extending direction of the partition wall.
Fig. 8B is a process drawing that schematically describes the procedure for determining the coverage of the inflow cell side catalyst at the reference position in the extending direction of the partition wall.
Fig. 8C is a process drawing that schematically describes the procedure for determining the coverage of the inflow cell side catalyst at the reference position in the extending direction of the partition wall.
Fig. 9A is a process drawing that schematically describes the procedure for determining the coverage of the inflow cell side catalyst at the reference position in the extending direction of the partition wall.
Fig. 9B is a process drawing that schematically describes the procedure for determining the coverage of the inflow cell side catalyst at the reference position in the extending direction of the partition wall.
Fig. 9C is a process drawing that schematically describes the procedure for determining the coverage of the inflow cell side catalyst at the reference position in the extending direction of the partition wall.
Fig. 10 is a graph illustrating the relationships of initial pressure loss and NOx 80% purification temperature to the coverage of the inflow cell side catalyst at the reference position in the extending direction of the partition wall determined for the exhaust gas purification devices of Examples 1 and 2 and Comparative Examples 1 to 3.

### Description of Embodiments

The following describes embodiments of an exhaust gas purification device according to the present disclosure.

The exhaust gas purification device according to the embodiments is an exhaust gas purification device including a honeycomb substrate and an inflow cell side catalyst. The honeycomb substrate includes a porous partition wall defining a plurality of cells extending from an inflow side end surface to an outflow side end surface. The plurality of cells include an inflow cell and an outflow cell adjacent across the partition wall. The inflow cell has an open inflow side end and a sealed outflow side end. The outflow cell has a sealed inflow side end and an open outflow side end. The inflow cell side catalyst is disposed at least one of on a partition wall surface on the inflow cell side or in a partition wall inner region on the inflow cell side in an inflow cell side catalyst region extending from an inflow side end of the partition wall along an extending direction up to a position apart by a predetermined distance. When a position at 50% of the length of the inflow cell side catalyst region from the inflow side end of the partition wall along the extending direction is set to a reference position (hereinafter, abbreviated as a "reference position in the extending direction of the partition wall" in some cases), at the reference position, a proportion of a region of the partition wall covered with the inflow cell side catalyst (hereinafter, abbreviated as a "coverage of the inflow cell side catalyst at the reference position in the extending direction of the partition wall" in some cases) in a plan view of the partition wall surface on the inflow cell side of the partition wall (hereinafter, abbreviated as a "plan view" in some cases) is in a range of 50% or more and 95% or less.

In the embodiments, the "inflow side" means a side from which exhaust gas flows in in the exhaust gas purification device, and the "outflow side" means a side from which the exhaust gas flows out in the exhaust gas purification device. The "extending direction of the partition wall" means a direction in which the partition wall extends. Furthermore, the honeycomb substrate has an axial direction usually approximately the same as the extending direction of the partition wall, and the cells have an extending direction (direction in which the cells extend) usually approximately the same as the extending direction of the partition wall. In the following description of the embodiments, the "extending direction" is the extending direction of the partition wall and means the direction approximately the same as the axial direction of the honeycomb substrate and the extending direction of the cells.

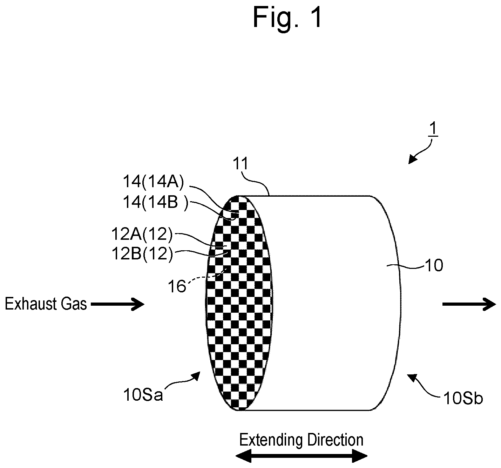

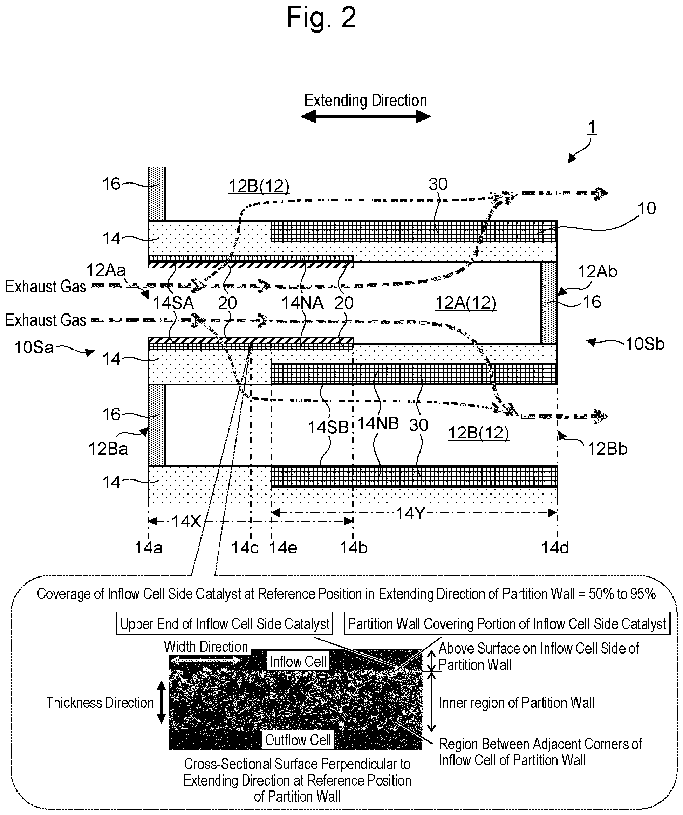

Here, an outline of the exhaust gas purification device according to the embodiments is described with an exhaust gas purification device according to a first embodiment as an example. Fig. 1 is a perspective view schematically illustrating the exhaust gas purification device according to the first embodiment. Fig. 2 is a cross-sectional view schematically illustrating a main part of a cross-sectional surface parallel to the extending direction of the cells in the exhaust gas purification device according to the first embodiment.

As illustrated in Fig. 1 and Fig. 2, an exhaust gas purification device 1 according to the first embodiment includes a honeycomb substrate 10, sealing members 16, an inflow cell side catalyst 20, and an outflow cell side catalyst 30. The honeycomb substrate 10 is a substrate in which a cylindrical-shaped frame portion 11 and a partition wall 14 partitioning a space inside the frame portion 11 into a honeycomb shape are integrally formed. The partition wall 14 is a porous body that defines a plurality of cells 12 extending from an inflow side end surface 10Sa to an outflow side end surface 10Sb of the honeycomb substrate 10. The partition wall 14 is shaped to have a cross-sectional surface perpendicular to the extending direction in a grid shape by including a plurality of wall portions 14A arranged to be separated from and parallel to one another and a plurality of wall portions 14B orthogonal to the plurality of wall portions 14A and arranged to be separated from and parallel to one another such that cross-sectional surfaces perpendicular to the extending direction of the plurality of cells 12 have square shapes.

The plurality of cells 12 include inflow cells 12A and outflow cells 12B adjacent across the partition wall 14. The inflow cell 12A has an open inflow side end 12Aa and an outflow side end 12Ab sealed by a sealing member 16. The outflow cell 12B has an inflow side end 12Ba sealed by a sealing member 16 and an open outflow side end 12Bb. The cross-sectional shapes perpendicular to the extending direction of the inflow cell 12A and the outflow cell 12B are rectangular and have four corners.

The inflow cell side catalyst 20 is disposed on a partition wall surface 14SA on the inflow cell 12A side in an inflow cell side catalyst region 14X extending from an inflow side end 14a of the partition wall 14 along the extending direction toward the outflow side up to a position 14b apart by a distance of 50% of the length in the extending direction of the partition wall 14. Furthermore, the inflow cell side catalyst 20 is also disposed in voids present in a partition wall inner region 14NA on the inflow cell 12A side in the inflow cell side catalyst region 14X of the partition wall 14. The most part of the inflow cell side catalyst 20 is disposed on the partition wall surface 14SA on the inflow cell 12A side of the partition wall 14, and the balance is disposed in the voids in the partition wall inner region 14NA on the inflow cell 12A side of the partition wall 14. The inflow cell side catalyst 20 contains a carrier and catalyst metal particles containing platinum (Pt) supported on the carrier.

The callout in Fig. 2 illustrates an image of a region between adjacent corners of the inflow cell 12A on a cross-sectional surface perpendicular to the extending direction at a reference position 14c in the extending direction of the partition wall 14. The image is taken with a scanning electron microscope (SEM) when a position apart from the inflow side end 14a of the partition wall 14 along the extending direction toward the outflow side by a distance of 50% of the length in the extending direction of the inflow cell side catalyst region 14X (25% of the length in the extending direction of the partition wall 14) is set to the reference position 14c (reference position 14c in the extending direction of the partition wall 14). As illustrated in the callout in Fig. 2, the coverage of the inflow cell side catalyst 20 at the reference position 14c in the extending direction of the partition wall 14 is in a range of 50% or more and 95% or less.

Here, the coverage of the inflow cell side catalyst 20 at the reference position 14c in the extending direction of the partition wall 14 is a proportion of the region of the partition wall 14 covered with the inflow cell side catalyst 20 in a plan view of the partition wall surface 14SA on the inflow cell 12A side of the partition wall 14 at the reference position 14c in the extending direction of the partition wall 14. Specifically, it means a proportion of the region between the adjacent corners of the inflow cell 12A accounted for by a partition wall covering portion of the inflow cell side catalyst 20 in a width direction on the cross-sectional surface perpendicular to the extending direction at the reference position 14c in the extending direction of the partition wall 14. The partition wall covering portion of the inflow cell side catalyst 20 corresponds to a portion of the inflow cell side catalyst 20, which covers the inflow cell 12A side of the partition wall 14. It means a portion continuous from an upper end of the inflow cell side catalyst 20 toward the outflow cell 12B side. Note that the upper end of the inflow cell side catalyst 20 means the opposite end of the inflow cell side catalyst 20 from the outflow cell 12B side. The width direction means a direction perpendicular to both the extending direction of the partition wall 14 and a thickness direction of the partition wall 14 (a direction perpendicular to the partition wall surface 14SA on the inflow cell 12A side of the partition wall 14).

The outflow cell side catalyst 30 is disposed in voids present in a partition wall inner region 14NB on the outflow cell 12B side in an outflow cell side catalyst region 14Y extending from an outflow side end 14d of the partition wall 14 along the extending direction toward the inflow side up to a position 14e apart by a distance of 70% of the length in the extending direction of the partition wall 14. The outflow cell side catalyst 30 contains a carrier and catalyst metal particles containing rhodium (Rh) supported on the carrier.

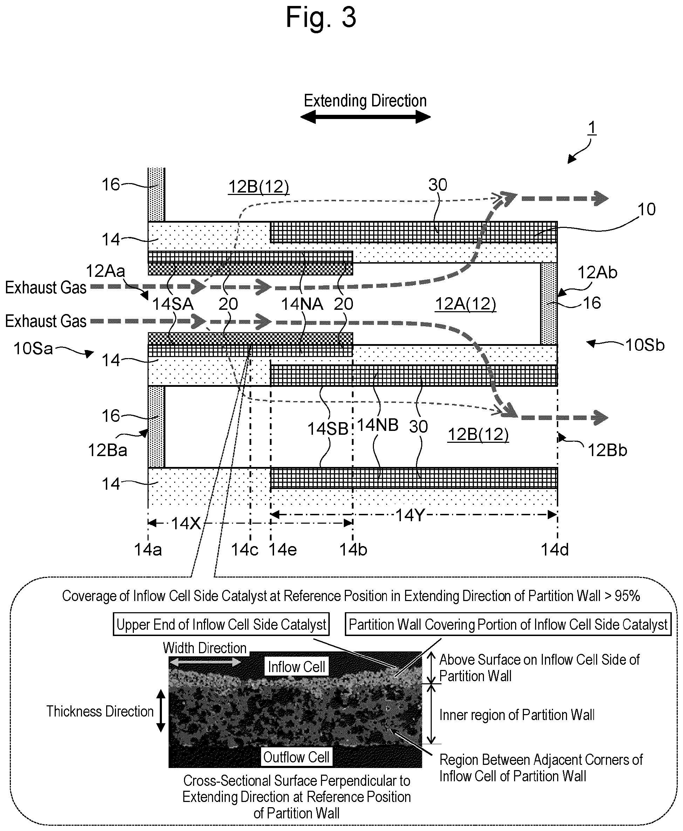

Meanwhile, for example, a structure illustrated in Fig. 3 is considered as a structure that has an inflow cell side catalyst disposed on a partition wall surface on the inflow cell side in an inflow cell side catalyst region of the partition wall similarly to the first embodiment in an exhaust gas purification device but is different from the structure of the first embodiment. Compared with the first embodiment, in the structure, the supply amount of the material (slurry) of the inflow cell side catalyst 20 supplied to the inflow cell side catalyst region 14X of the partition wall 14 during the production of the device is excessive. As a result, a portion of the inflow cell side catalyst 20 positioned above the partition wall surface 14SA on the inflow cell 12A side of the partition wall 14 becomes thicker, causing the coverage of the inflow cell side catalyst 20 at the reference position 14c in the extending direction of the partition wall 14 to be higher than 95%. That is, the inflow cell side catalyst 20 is disposed to cover the entire portion on the inflow cell 12A side in the inflow cell side catalyst region 14X of the partition wall 14 as a layer with almost no voids that expose the inflow cell side catalyst region 14X of the partition wall 14 in the plan view of the partition wall surface 14SA on the inflow cell 12A side of the partition wall 14. In view of this, most of the opening portions of the voids in the partition wall 14 are blocked by the inflow cell side catalyst 20 on the partition wall surface 14SA in the inflow cell side catalyst region 14X of the partition wall 14. This substantially restricts the exhaust gas from passing through the partition wall 14 from the inflow cell 12A side to the outflow cell 12B side in the inflow cell side catalyst region 14X of the partition wall 14. As a result, pressure loss significantly increases.

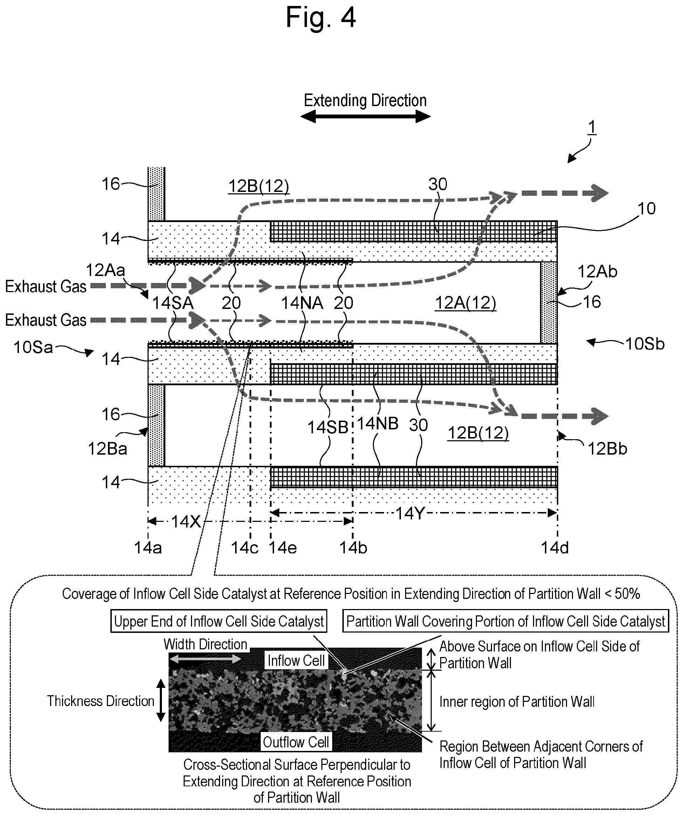

In addition, for example, a structure illustrated in Fig. 4 is considered as a structure that has the inflow cell side catalyst disposed on the partition wall surface on the inflow cell side in the inflow cell side catalyst region of the partition wall similarly to the first embodiment but is different from the structure of the first embodiment. Compared with the first embodiment, in the structure, the supply amount of the material of the inflow cell side catalyst 20 supplied to the inflow cell side catalyst region 14X of the partition wall 14 during the production of the device is insufficient. As a result, the portion of the inflow cell side catalyst 20 positioned above the partition wall surface 14SA on the inflow cell 12A side of the partition wall 14 becomes thinner, causing the coverage of the inflow cell side catalyst 20 at the reference position 14c in the extending direction of the partition wall 14 to be lower than 50%. That is, the inflow cell side catalyst 20 is merely disposed in places in the inflow cell side catalyst region 14X of the partition wall 14 in the plan view of the partition wall surface 14SA on the inflow cell 12A side of the partition wall 14. In view of this, most of the opening portions of the voids in the partition wall 14 are not blocked by the inflow cell side catalyst 20 on the partition wall surface 14SA in the inflow cell side catalyst region 14X of the partition wall 14 and are kept in a state of being open to the inflow cell 12A. Accordingly, in the inflow cell side catalyst region 14X of the partition wall 14, the coverage of the inflow cell side catalyst 20 is lower than a predetermined value. In addition, the flow rate of the exhaust gas passing through the partition wall 14 from the inflow cell 12A side to the outflow cell 12B side becomes excessive, and the flow rate of the exhaust gas in the inflow cell 12A becomes insufficient, thus causing a sufficient amount of exhaust gas not to be in contact with the inflow cell side catalyst 20. As a result, the exhaust gas cannot be sufficiently purified by the inflow cell side catalyst 20.

In contrast to this, in the exhaust gas purification device 1 according to the first embodiment, unlike the structures illustrated in Fig. 3 and Fig. 4, the supply amount of the material of the inflow cell side catalyst 20 supplied to the inflow cell side catalyst region 14X of the partition wall 14 during the production of the device is adjusted to an appropriate amount. As a result, as illustrated in Fig. 2, the portion of the inflow cell side catalyst 20 positioned above the partition wall surface 14SA on the inflow cell 12A side of the partition wall 14 has an appropriate thickness, causing the coverage of the inflow cell side catalyst 20 at the reference position 14c in the extending direction of the partition wall 14 to be in the range of 50% or more and 95% or less. That is, the inflow cell side catalyst 20 is disposed in a shape where the voids that expose the inflow cell side catalyst region 14X of the partition wall 14 scatter in the plan view of the partition wall surface 14SA on the inflow cell 12A side of the partition wall 14, and it is not formed to be a layer with absolutely no or almost no such voids as illustrated in Fig. 3. In view of this, a desired proportion of the opening portions of the voids in the partition wall 14 is not blocked by the inflow cell side catalyst 20 on the partition wall surface 14SA in the inflow cell side catalyst region 14X of the partition wall 14 and is kept in a state of being open to the inflow cell 12A. This allows the exhaust gas to pass through the partition wall 14 from the inflow cell 12A side to the outflow cell 12B side at a flow rate that does not significantly increase the pressure loss in the inflow cell side catalyst region 14X of the partition wall 14. Accordingly, a significant increase in pressure loss can be suppressed. In addition, in the inflow cell side catalyst region 14X of the partition wall 14, the coverage of the inflow cell side catalyst 20 is equal to or more than a predetermined value. Also, the flow rate of the exhaust gas passing through the partition wall 14 from the inflow cell 12A side to the outflow cell 12B side does not become excessive, and the flow rate of the exhaust gas in the inflow cell 12A is secured sufficiently, thus causing a sufficient amount of exhaust gas to be in contact with the inflow cell side catalyst 20. Accordingly, the exhaust gas can be sufficiently purified by the inflow cell side catalyst 20. Furthermore, in the exhaust gas purification device 1 according to the first embodiment, regarding PM trap performance, which traps and removes PM from exhaust gas, the inflow cell side catalyst 20 is provided with PM trap functionality by securing an appropriate thickness as the thickness of the inflow cell side catalyst 20. In addition, since the flow rate of the exhaust gas is reduced due to the suppression of the pressure loss, PM trap efficiency is improved. Accordingly, the PM trap performance can be improved.

Therefore, with the exhaust gas purification device according to the embodiments, for example, similarly to the exhaust gas purification device according to the first embodiment, when the coverage of the inflow cell side catalyst at a reference position in the extending direction of the partition wall is in a range of 50% or more and 95% or less, the increase in pressure loss can be suppressed. In addition, the exhaust gas can be sufficiently purified by the inflow cell side catalyst. Furthermore, the PM trap performance can be improved.

Subsequently, each configuration of the exhaust gas purification device according to the embodiments will be described in detail.

### 1. Honeycomb Substrate

The honeycomb substrate includes a porous partition wall defining a plurality of cells extending from the inflow side end surface to the outflow side end surface. The plurality of cells include inflow cells and outflow cells adjacent across the partition wall. The inflow cell has an open inflow side end and a sealed outflow side end, and the outflow cell has a sealed inflow side end and an open outflow side end. The honeycomb substrate is what is called a wall flow type honeycomb substrate.

The honeycomb substrate is a substrate in which a frame portion and the partition wall partitioning the space inside the frame portion into a honeycomb shape are integrally formed.

The axial length of the honeycomb substrate is not specifically limited, and a common length can be used. For example, the length may be in a range of 10 mm or more and 500 mm or less in some embodiments, and among them, the length may be in a range of 50 mm or more and 300 mm or less in some embodiments. The capacity of the honeycomb substrate, namely, the total volume of the cells, is not specifically limited, and a common capacity can be used. For example, the capacity may be in a range of 0.1 L or more and 5 L or less in some embodiments.

The material of the honeycomb substrate is not specifically limited, and a common material can be used. Examples of the material include ceramics, such as cordierite, silicon carbide (SiC), and aluminum titanate, as well as alloys, such as stainless steel.

The shape of the frame portion is not specifically limited, and a common shape can be used. Examples of the shape include a tubular shape, such as an elliptical cylindrical shape and a polygonal cylindrical shape, in addition to a cylindrical shape. Other configurations of the frame portion are not specifically limited, and common configurations can be used.

The shape of the partition wall is not specifically limited, and a common shape can be used. Usually, similarly to the first embodiment, the partition wall includes a plurality of wall portions, which extend in the extending direction and are arranged to be separated from and parallel to one another, and another plurality of wall portions, which intersect with the plurality of wall portions, extend in the extending direction, and are arranged to be separated from and parallel to one another, such that the cross-sectional surfaces perpendicular to the extending direction of the plurality of cells have desired shapes. While the length in the extending direction of the partition wall is not specifically limited, it is usually approximately the same as the axial length of the honeycomb substrate. The thickness of the partition wall is not specifically limited, and a common thickness can be used. For example, the thickness may be in a range of 50 µm or more and 2000 µm or less in some embodiments, and among them, the thickness may be a range of 100 µm or more and 1000 µm or less in some embodiments. This is because when the thickness of the partition wall is within these ranges, sufficient PM trap performance can be obtained while securing the strength of the substrate, and pressure loss can be sufficiently suppressed.

The partition wall has a porous structure having voids formed of pores through which exhaust gas can pass. The porosity of a portion of the partition wall where a catalyst layer is not disposed is not specifically limited, and a common porosity can be used. For example, the porosity may be in a range of 40% or more and 70% or less in some embodiments, and among them, the porosity may be a range of 50% or more and 70% or less in some embodiments. This is because when the porosity is equal to or more than the lower limits of these ranges, pressure loss can be effectively suppressed. When the porosity is equal to or less than the upper limits of these ranges, sufficient mechanical strength can be secured. The mean pore size of the voids in the partition wall is not specifically limited, and a common mean pore size can be used. For example, the mean pore size may be in a range of 1 µm or more and 60 µm or less in some embodiments, and among them, the mean pore size may be a range of 5 µm or more and 30 µm or less in some embodiments. This is because when the mean pore size of the voids is within these ranges, sufficient PM trap performance can be obtained, and pressure loss can be sufficiently suppressed. The "mean pore size of the voids in the partition wall" means, for example, one measured by a method of mercury penetration.

The inflow cell and the outflow cell are formed by partitioning the space inside the frame portion with the partition wall, and they are adjacent across the partition wall. The inflow cell and the outflow cell are usually surrounded by the partition wall in a direction perpendicular to the extending direction.

The outflow side end of the inflow cell is usually sealed by a sealing member. The inflow side end of the outflow cell is usually sealed by a sealing member. The length in the extending direction of the sealing member is not specifically limited and may be a common length. For example, the length may be in a range of 2 mm or more and 20 mm or less in some embodiments. The material of the sealing member is not specifically limited and may be a common material.

The cross-sectional shapes perpendicular to the extending direction of the inflow cell and the outflow cell are not specifically limited, and common shapes can be used. The cross-sectional shapes can be appropriately configured considering the flow rate, components, and the like of the exhaust gas passing through the exhaust gas purification device. Examples of the cross-sectional shapes include a rectangular shape, such as a square, a polygon including a hexagon and the like, and a circular shape. The cross-sectional areas perpendicular to the extending direction of the inflow cell and the outflow cell are not specifically limited, and common cross-sectional areas can be used. For example, the cross-sectional areas are in a range of 1 mm² or more and 7 mm² or less. While the lengths in the extending direction of the inflow cell and the outflow cell are not specifically limited, they are usually approximately the same as the length obtained by subtracting the length in the extending direction of the sealing member from the axial length of the honeycomb substrate. Examples of the arrangement aspect of the inflow cells and the outflow cells include an aspect like a checkered pattern in which the inflow cells and the outflow cells are arranged in alternation, similarly to the arrangement aspect according to the first embodiment.

### 2. Inflow Cell Side Catalyst

The inflow cell side catalyst is disposed at least one of on a partition wall surface on the inflow cell side or in a partition wall inner region (voids present in the inner region) on the inflow cell side in an inflow cell side catalyst region extending from the inflow side end of the partition wall along the extending direction up to a position apart by a predetermined distance. When a position at 50% of the length of the inflow cell side catalyst region from the inflow side end of the partition wall along the extending direction is set to a reference position (reference position in the extending direction of the partition wall), at the reference position, the proportion of the region of the partition wall covered with the inflow cell side catalyst (the coverage of the inflow cell side catalyst at the reference position in the extending direction of the partition wall) in a plan view of the partition wall surface on the inflow cell side of the partition wall is in a range of 50% or more and 95% or less. Here, the "inflow cell side catalyst region" means a region extending from the inflow side end of the partition wall along the extending direction toward the outflow side up to a position apart by a predetermined distance. When the coverage of the inflow cell side catalyst is equal to or more than the lower limit of the range, the exhaust gas can be sufficiently purified by the inflow cell side catalyst. In addition, when the coverage of the inflow cell side catalyst is equal to or less than the upper limit of the range, an increase in pressure loss can be suppressed.

The inflow cell side catalyst region of the partition wall is not specifically limited insofar as the region extends from the inflow side end of the partition wall along the extending direction toward the outflow side up to a position apart by a predetermined distance. For example, similarly to the first embodiment, the inflow cell side catalyst region may be a region extending from the inflow side end of the partition wall along the extending direction toward the outflow side up to a position apart by a distance of 25% or more and 100% or less of the length in the extending direction of the partition wall in some embodiments, among them, the inflow cell side catalyst region may be a region extending up to a position apart by a distance of 35% or more and 80% or less of the length in the extending direction of the partition wall in some embodiments, and in particular, the inflow cell side catalyst region may be a region extending up to a position apart by a distance of 40% or more and 60% or less of the length in the extending direction of the partition wall in some embodiments. This is because when the length in the extending direction of the inflow cell side catalyst region (the length in the extending direction of the inflow cell side catalyst) is equal to or more than the lower limits of these distance ranges, the frequency of contact with the gas can be ensured, thus securing the purification function. In addition, that is because when the length in the extending direction of the inflow cell side catalyst region is equal to or less than the upper limits of these distance ranges, the increase in the pressure loss caused by catalyst coating on the partition wall surface on the inflow cell side of the partition wall can be suppressed.

The reference position in the extending direction of the partition wall is not specifically limited insofar as it is a position apart from the inflow side end of the partition wall along the extending direction toward the outflow side by a distance of 50% of the length in the extending direction of the inflow cell side catalyst region. For example, when the length in the extending direction of the inflow cell side catalyst region is 50% of the length in the extending direction of the partition wall, the reference position in the extending direction of the partition wall is a position apart from the inflow side end of the partition wall along the extending direction toward the outflow side by a distance of 25% of the length in the extending direction of the partition wall.

The "coverage of the inflow cell side catalyst at the reference position in the extending direction of the partition wall" is a proportion of the region of the partition wall covered with the inflow cell side catalyst in the plan view of the partition wall surface on the inflow cell side of the partition wall at the reference position in the extending direction of the partition wall. Specifically, for example, it means a proportion of a predetermined region in the width direction (such as the region between adjacent corners of the inflow cell) accounted for by a partition wall covering portion of the inflow cell side catalyst in the width direction on the cross-sectional surface perpendicular to the extending direction at the reference position in the extending direction of the partition wall. The "partition wall covering portion of the inflow cell side catalyst" corresponds to a portion of the inflow cell side catalyst, which covers the inflow cell side of the partition wall. It means a portion continuous from the upper end of the inflow cell side catalyst toward the outflow cell side. Note that the "upper end of the inflow cell side catalyst" means the opposite end of the inflow cell side catalyst from the outflow cell side. The "width direction" means a direction perpendicular to both the extending direction of the partition wall and the thickness direction of the partition wall (the direction perpendicular to the partition wall surface on the inflow cell side of the partition wall).

The coverage of the inflow cell side catalyst at the reference position in the extending direction of the partition wall is not specifically limited insofar as it is in a range of 50% or more and 95% or less. The coverage may be in a range of 55% or more and 95% or less in some embodiments, among them, the coverage may be in a range of 55% or more and 80% or less in some embodiments, and in particular, the coverage may be in a range of 55% or more and 75% or less in some embodiments. This is because when the coverage is equal to or more than the lower limits of these ranges, the exhaust gas can be purified by the inflow cell side catalyst further effectively. In addition, that is because when the coverage is equal to or less than the upper limits of these ranges, the increase in pressure loss can be suppressed further effectively.

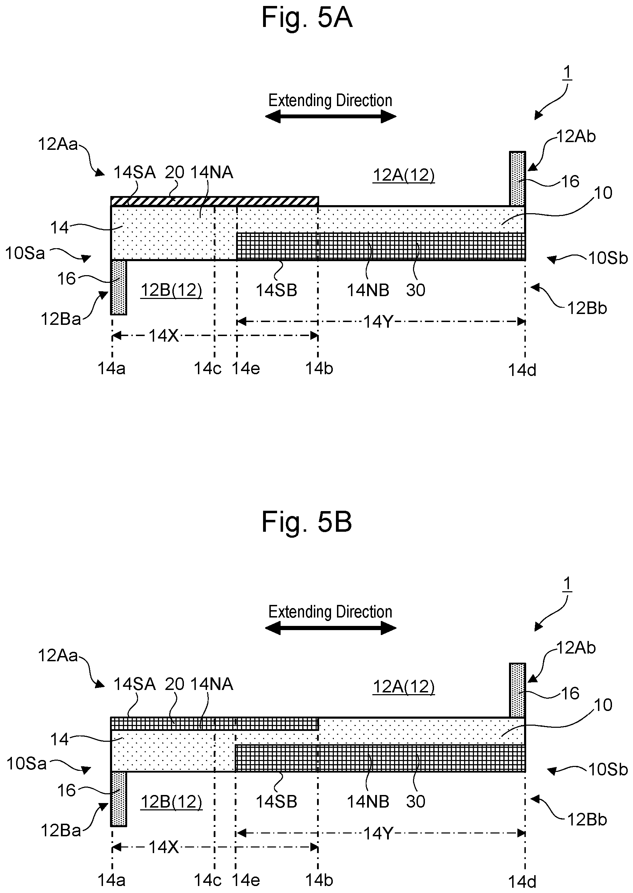

The inflow cell side catalyst is not specifically limited insofar as it is disposed at least one of on the partition wall surface on the inflow cell side or in the partition wall inner region on the inflow cell side in the inflow cell side catalyst region of the partition wall. For example, the inflow cell side catalyst may be disposed both on the partition wall surface 14SA on the inflow cell 12A side and in the partition wall inner region 14NA on the inflow cell 12A side in the inflow cell side catalyst region 14X of the partition wall 14, similarly to the inflow cell side catalyst 20 according to the first embodiment. Figs. 5A and 5B are cross-sectional views schematically illustrating main parts of the cross-sectional surfaces parallel to the extending direction of cells in modifications of the exhaust gas purification device according to the first embodiment. For example, similarly to the inflow cell side catalyst 20 illustrated in Fig. 5A, out of on the partition wall surface 14SA on the inflow cell 12A side and in the partition wall inner region 14NA on the inflow cell 12A side in the inflow cell side catalyst region 14X of the partition wall 14, the inflow cell side catalyst may be disposed only on the partition wall surface 14SA. For example, similarly to the inflow cell side catalyst 20 illustrated in Fig. 5B, out of on the partition wall surface 14SA on the inflow cell 12A side and in the partition wall inner region 14NA on the inflow cell 12A side in the inflow cell side catalyst region 14X of the partition wall 14, the inflow cell side catalyst may be disposed only in the partition wall inner region 14NA.

While the average thickness of the partition wall covering portion of the inflow cell side catalyst is not specifically limited, for example, it may be in a range of 1 µm or more and 50 µm or less in some embodiments, and among them, it may be in a range of 1 µm or more and 10 µm or less in some embodiments. This is because when the average thickness is equal to or more than the lower limits of these ranges, the coverage of the inflow cell side catalyst is easily set to be equal to or more than a predetermined value such that the exhaust gas can be effectively purified by the inflow cell side catalyst. That is because when the average thickness is equal to or less than the upper limits of these ranges, the coverage of the inflow cell side catalyst is easily set to be equal to or less than a predetermined value such that the increase in pressure loss can be effectively suppressed. Here, the "average thickness of the partition wall covering portion of the inflow cell side catalyst" means, for example, the average thickness of the partition wall covering portion of the inflow cell side catalyst (a portion continuous from the upper end of the inflow cell side catalyst toward the outflow cell side) in a predetermined region in the width direction (such as the region between adjacent corners of the inflow cell) on the cross-sectional surface perpendicular to the extending direction at the reference position in the extending direction of the partition wall. When the average thickness of the partition wall covering portion of the inflow cell side catalyst is calculated, the thickness of the partition wall covering portion of the inflow cell side catalyst at a position where the partition wall covering portion of the inflow cell side catalyst is not disposed is set to 0 µm in the predetermined region in the width direction of the cross-sectional surface of the partition wall (for example, a region in the width direction of the taken image of the cross-sectional surface in Fig. 2).

The inflow cell side catalyst usually includes catalyst metal particles and a carrier on which the catalyst metal particles are supported. The inflow cell side catalyst is, for example, a sintered body including a carrier with catalyst in which the catalyst metal particles are supported on a carrier.

The material of the catalyst metal particles is not specifically limited, and a common material can be used. Examples of the material include noble metals, such as platinum (Pt), palladium (Pd), and rhodium (Rh). The material of the catalyst metal particles may be one metal or two or more metals or may be an alloy containing two or more metals. The material of the catalyst metal particles may be at least one of Pt, Pd, or the like in some embodiments.

The mean particle size of the catalyst metal particles is not specifically limited, and a common mean particle size can be used. For example, it may be in a range of 0.1 nm or more and 20 nm or less in some embodiments. This is because when the mean particle size is equal to or less than the upper limit of the range, the contact area with the exhaust gas can be increased. The mean particle size of the catalyst metal particles means, for example, an average value obtained from particle sizes measured with a transmission electron microscope (TEM).

The content of the catalyst metal particles is not specifically limited, and a common content can be used. The content differs depending on the material of the catalyst metal particles. For example, when the material is at least one of Pt, Pd, or Rh, the content may be in a range of 0.05 g or more and 5 g or less per liter of the honeycomb substrate in some embodiments. This is because when the content is equal to or more than the lower limit of the range, sufficient catalytic action can be obtained. When the content is equal to or less than the upper limit of the range, the grain growth of the catalyst metal particles can be suppressed while providing an advantage in cost. Here, the content of the catalyst metal particles per liter of the substrate volume means a value obtained by dividing the mass of the catalyst metal particles contained in the inflow cell side catalyst by the volume of a part in the axial direction of the honeycomb substrate having an axial length that is the same as the length in the extending direction of the inflow cell side catalyst (the length in the extending direction of the inflow cell side catalyst region).

The material of the carrier is not specifically limited, and a common material can be used. Examples of the material include metallic oxides, such as alumina (Al₂O₃), ceria (CeO₂), zirconia (ZrO₂), silica (SiO₂), magnesia (MgO), and titanium oxide (TiO₂), and a solid solution of, for example, an alumina-zirconia (Al₂O₃-ZrO₂) complex oxide, a ceria-zirconia (CeO₂-ZrO₂) complex oxide, and the like. The material of the carrier may be one or two or more of them. The material of the carrier may be at least one of alumina, a ceria-zirconia complex oxide, or the like in some embodiments.

The shape of the carrier is not specifically limited, and a common shape can be used. The carrier may be in powder form in some embodiments. This is because a larger specific surface area can be secured. A mean particle size D50 of the carrier in powder form is not specifically limited and may be a common mean particle size. For example, the mean particle size D50 may be in a range of 1 µm or more and 15 µm or less in some embodiments, and particularly may be in a range of 4 µm or more and 10 µm or less in some embodiments. This is because when the mean particle size D50 is equal to or more than the lower limits of these ranges, sufficient heat resistant property can be obtained. That is because when the mean particle size D50 is equal to or less than the upper limits of these ranges, purification performance can be effectively improved by sufficiently securing the dispersibility of the catalyst metal particles. The mean particle size D50 of the carrier in powder form is determined by, for example, laser diffraction and scattering, and can be measured using, for example, a laser scattering particle size distribution analyzer LA-960 (manufactured by HORIBA, Ltd.).

The mass ratio of the catalyst metal particles to the total mass of the catalyst metal particles and the carrier is not specifically limited, and a common mass ratio can be used. For example, the mass ratio may be in a range of 0.01 mass% or more and 10 mass% or less in some embodiments. This is because when the mass ratio is equal to or more than the lower limit of the range, sufficient catalytic action can be obtained. When the mass ratio is equal to or less than the upper limit of the range, the grain growth of the catalyst metal particles can be suppressed while providing an advantage in cost.

The method in which the catalyst metal particles are supported on the carrier is not specifically limited, and a common method can be used. Examples of the method include a method in which the carrier is immersed in an aqueous solution containing a catalytic metal salt (such as nitrate) or a catalytic metal complex (such as tetraammine complex) and subsequently dried and fired.

The inflow cell side catalyst may include, for example, a cocatalyst, such as an oxygen storage capacity (OSC) material in addition to the catalyst metal particles and the carrier.

The material of the cocatalyst is not specifically limited and may be a common material. Examples of the material include a material similar to that of the carrier. Examples of the material of the cocatalyst, especially the OSC material, include ceria and complex oxides containing ceria. The complex oxides containing ceria include, for example, a ceria-zirconia complex oxide. While the shape of the cocatalyst is not specifically limited and may be a common shape, examples of the shape include a shape similar to that of the carrier. While the mean particle size D50 of the cocatalyst in powder form is not specifically limited and may be a common mean particle size, examples of the mean particle size D50 include a mean particle size similar to that of the carrier in powder form. The mass ratio of the cocatalyst to the total mass of the catalyst metal particles, the carrier, and the cocatalyst is not specifically limited, and a common mass ratio can be used. For example, the mass ratio may be in a range of 30 mass% or more and 80 mass% or less in some embodiments.

While the density of the inflow cell side catalyst is not specifically limited, for example, the density may be in a range of 5 g/L or more and 100 g/L or less in some embodiments, among them, the density may be a range of 10 g/L or more and 65 g/L or less in some embodiments, and in particular, the density may be a range of 10 g/L or more and 30 g/L or less in some embodiments. This is because when the density of the inflow cell side catalyst is equal to or more than the lower limits of these ranges, the coverage of the inflow cell side catalyst is easily set to be equal to or more than a predetermined value such that the exhaust gas can be effectively purified by the inflow cell side catalyst. In addition, that is because when the density of the inflow cell side catalyst is equal to or less than the upper limits of these ranges, the coverage of the inflow cell side catalyst is easily set to be equal to or less than a predetermined value such that the increase in pressure loss can be effectively suppressed. The "density of the inflow cell side catalyst" means a value obtained by dividing the mass of the inflow cell side catalyst by the volume of a part in the axial direction of the honeycomb substrate having an axial length that is the same as the length in the extending direction of the inflow cell side catalyst (the length in the extending direction of the inflow cell side catalyst region).

The method for forming the inflow cell side catalyst is not specifically limited, and a common method can be used. Examples of the method include a method in which a slurry prepared by mixing the catalyst metal particles and the carrier on which the catalyst metal particles are supported with a solvent is supplied at least one of onto the partition wall surface on the inflow cell side or into the partition wall inner region on the inflow cell side (voids present in the inner region) in the inflow cell side catalyst region of the partition wall, and subsequently, the slurry is dried and fired.

In the method for forming the inflow cell side catalyst by drying and firing the slurry after supplying it to the partition wall, the slurry may contain any given components, such as a cocatalyst, a binder, and an additive, as necessary, in addition to the catalyst metal particles, the carrier, and a solvent. For example, when the inflow cell side catalyst is formed mainly on the partition wall surface on the inflow cell side of the partition wall, similarly to the first embodiment and the modification illustrated in Fig. 5A, the mean particle size and the like of solid contents, such as the carrier and cocatalyst in powder form, contained in the slurry may be adjusted appropriately so as not to penetrate the inner region of the partition wall. In addition, for example, when the inflow cell side catalyst is formed mainly in the partition wall inner region on the inflow cell side of the partition wall, similarly to the first embodiment and the modification illustrated in Fig. 5B, the slurry may be adjusted appropriately so as to penetrate the inner region of the partition wall.

While the method for preparing the slurry is not specifically limited and may be a common method, examples include the following method. First, a carrier (such as alumina) in powder form is immersed in a solution (such as an aqueous solution containing Pt nitrate) containing a catalytic metal salt (such as Pt nitrate) or a catalytic metal complex, and subsequently, they are dried and fired, thus preparing noble metal supporting powder (such as Pt supporting powder) on which a noble metal (such as Pt) is supported. Next, an OSC material (such as a ceria-zirconia complex oxide), a cocatalyst (such as barium sulfate), a binder, and an ion exchanged water are added to the noble metal supporting powder, and they are sufficiently stirred and wet-ground such that the mean particle size D50 of the solid contents is a desired value. Thus, the slurry is prepared.

The mean particle size D50 of the solid contents of the slurry is not specifically limited and may be a common mean particle size. For example, when the inflow cell side catalyst is formed mainly on the partition wall surface on the inflow cell side of the partition wall, similarly to the first embodiment and the modification illustrated in Fig. 5A, the mean particle size D50 may be in a range of 1/10 or more and 2/3 or less of the mean pore size (MPS) (for example, in a range of 10 µm to 20 µm) of the voids in the partition wall in some embodiments, and among them, the mean particle size D50 may be in a range of 1/4 or more and 2/3 or less of the mean pore size of the voids in the partition wall in some embodiments. Specifically, for example, the mean particle size D50 may be in a range of 1 µm or more and 15 µm or less in some embodiments, and among them, the mean particle size D50 may be in a range of 4 µm or more and 10 µm or less in some embodiments. This is because when the mean particle size D50 of the solid contents of the slurry is equal to or more than the lower limits of these ranges, sufficient heat resistant property can be obtained, and entry of the solid contents of the slurry into the inner region of the partition wall can be suppressed, thereby arranging the solid contents of the slurry mainly on the partition wall surface on the inflow cell side of the partition wall. That is because when the mean particle size D50 of the solid contents of the slurry is equal to or less than the upper limits of these ranges, the dispersibility of the catalyst metal particles can be sufficiently secured. The mean particle size D50 of the solid contents of the slurry can be measured using, for example, a laser scattering particle size distribution analyzer LA-960 (manufactured by HORIBA, Ltd.).

The method for supplying the slurry at least one of onto the partition wall surface on the inflow cell side or into the partition wall inner region on the inflow cell side in the inflow cell side catalyst region of the partition wall is not specifically limited and may be a common method. Examples of the method include a method in which the honeycomb substrate is immersed in the slurry from the inflow side and taken out from the slurry after the elapse of a predetermined period. In this method, for example, when the inflow cell side catalyst is formed mainly on the partition wall surface on the inflow cell side of the partition wall, the properties, such as the solid content concentration and viscosity, of the slurry may be adjusted appropriately such that the slurry is not supplied into the inner region of the partition wall, or the outflow cells may be pressurized from the outflow side to cause a pressure difference between the outflow cells and the inflow cells. In addition, for example, when the inflow cell side catalyst is formed mainly in the partition wall inner region on the inflow cell side of the partition wall, the properties, such as the solid content concentration and viscosity, of the slurry may be adjusted appropriately such that the slurry is supplied into the partition wall inner region on the inflow cell side of the partition wall. Furthermore, in the method for supplying the slurry at least one of onto the partition wall surface on the inflow cell side or into the partition wall inner region on the inflow cell side in the inflow cell side catalyst region of the partition wall, a method in which the slurry is blown off using a blower when supplying the slurry so as not to supply the slurry to parts on the partition wall surface and in the partition wall inner region, where the catalyst is unnecessary, may be used.

In the method for drying and firing the slurry after supplying it to the partition wall, the drying condition is not specifically limited. While the drying condition depends on the shapes, dimensions, and the like of the honeycomb substrate, the carrier, and the like, for example, it may be a condition in which the drying is performed at a temperature in a range of 80°C or more and 300°C or less for a period in a range of one hour or more and 10 hours or less in some embodiments. While the firing condition is not specifically limited, for example, it may be a condition in which the firing is performed at a temperature in a range of 400°C or more and 1000°C or less for a period in a range of one hour or more and four hours or less in some embodiments.

In the method for forming the inflow cell side catalyst by drying and firing the slurry after supplying it to the partition wall, the coverage of the inflow cell side catalyst at the reference position in the extending direction of the partition wall can be adjusted, for example, by a method of adjusting the mean particle size D50 of the solid contents of the slurry, the solid content concentration of the slurry, the properties of the slurry, the supply amount of the slurry, the drying condition, the firing condition, and the like. In addition, the properties, such as the thickness of the partition wall covering portion of the inflow cell side catalyst and the porosity of the inflow cell side catalyst, can also be adjusted by a similar method.

### 3. Exhaust Gas Purification Device

The exhaust gas purification device includes a honeycomb substrate and an inflow cell side catalyst. The exhaust gas purification device usually further includes sealing members that seal the outflow side ends of inflow cells and sealing members that seal the inflow side ends of outflow cells.

### (1) Outflow Cell Side Catalyst

The exhaust gas purification device may further include an outflow cell side catalyst disposed in an outflow cell side catalyst region extending from the outflow side end of a partition wall along the extending direction up to a position apart by a predetermined distance, similarly to the exhaust gas purification device according to the first embodiment.

The outflow cell side catalyst region of the partition wall is not specifically limited insofar as the region extends from the outflow side end of the partition wall along the extending direction toward the inflow side up to a position apart by a predetermined distance. For example, the outflow cell side catalyst region may be a region extending from the outflow side end of the partition wall along the extending direction up to a position overlapping an inflow cell side catalyst region in some embodiments. This is because exhaust gas passing through a region of the partition wall where the catalyst is not disposed and being discharged from the exhaust gas purification device without being purified can be suppressed.

The outflow cell side catalyst is disposed at least one of in a partition wall inner region (voids present in the inner region) on the outflow cell side or on the partition wall surface on the outflow cell side in the outflow cell side catalyst region of the partition wall.

The outflow cell side catalyst usually includes catalyst metal particles and a carrier on which the catalyst metal particles are supported and is, for example, a sintered body including a carrier with catalyst in which the catalyst metal particles are supported on a carrier.

The material of the catalyst metal particles is similar to that of the catalyst metal particles included in the inflow cell side catalyst, except that it may be rhodium (Rh) or the like. The mean particle size of the catalyst metal particles is similar to that of the catalyst metal particles included in the inflow cell side catalyst.

While the content of the catalyst metal particles is not specifically limited and may be a common content, it differs depending on the material of the catalyst metal particles. For example, when the material is at least one of Pt, Pd, or Rh, the content may be in a range of 0.01 g or more and 2 g or less per liter of the honeycomb substrate in some embodiments. This is because when the content is equal to or more than the lower limit of the range, sufficient catalytic action can be obtained. When the content is equal to or less than the upper limit of the range, the grain growth of the catalyst metal particles can be suppressed while providing an advantage in cost. Here, the content of the catalyst metal particles per liter of the substrate volume means a value obtained by dividing the mass of the catalyst metal particles contained in the outflow cell side catalyst by the volume of a part in the axial direction of the honeycomb substrate having an axial length that is the same as the length in the extending direction of the outflow cell side catalyst (the length in the extending direction of the outflow cell side catalyst region).

The material and the shape of the carrier are similar to those of the carrier included in the inflow cell side catalyst. The mean particle size D50 of the carrier in powder form is not specifically limited and may be a common mean particle size. The mass ratio of the catalyst metal particles to the total mass of the catalyst metal particles and the carrier is similar to the mass ratio of the inflow cell side catalyst. The method in which the catalyst metal particles are supported on the carrier is similar to the method for the inflow cell side catalyst. The outflow cell side catalyst may include a cocatalyst and the like, similarly to the inflow cell side catalyst. The cocatalyst is similar to the cocatalyst included in the inflow cell side catalyst.

While the density of the outflow cell side catalyst is not specifically limited, it may be in a range of 30 g/L or more and 250 g/L or less in some embodiments. This is because when the density of the outflow cell side catalyst is equal to or more than the lower limit of the range, purification performance can be effectively improved. That is because when the density of the outflow cell side catalyst is equal to or less than the upper limit of the range, pressure loss can be effectively suppressed. The "density of the outflow cell side catalyst" means a value obtained by dividing the mass of the outflow cell side catalyst by the volume of a part in the axial direction of the honeycomb substrate having an axial length that is the same as the length in the extending direction of the outflow cell side catalyst (the length in the extending direction of the outflow cell side catalyst region).

The method for forming the outflow cell side catalyst is not specifically limited and may be a common method. Examples of the method include a method in which a slurry prepared by mixing the catalyst metal particles and the carrier on which the catalyst metal particles are supported with a solvent is supplied at least one of into the partition wall inner region on the outflow cell side or onto the partition wall surface on the outflow cell side in the outflow cell side catalyst region of the partition wall, and subsequently, the slurry is dried and fired.

In the method for forming the outflow cell side catalyst by drying and firing the slurry after supplying it to the partition wall, the slurry is similar to the slurry used for forming the inflow cell side catalyst, except that the catalyst metal particles and the carrier included in the outflow cell side catalyst are contained instead of the catalyst metal particles and the carrier included in the inflow cell side catalyst. The method for preparing the slurry is similar to the method for preparing the slurry used for forming the inflow cell side catalyst. The mean particle size D50 of the solid contents of the slurry is not specifically limited and may be a common mean particle size.

The method for supplying the slurry at least one of into the partition wall inner region on the outflow cell side or onto the partition wall surface on the outflow cell side in the outflow cell side catalyst region of the partition wall is not specifically limited and may be a common method. Examples of the method include a method in which the honeycomb substrate is immersed in the slurry from the outflow side and taken out from the slurry after the elapse of a predetermined period. In this method, the properties, such as the solid content concentration and viscosity, of the slurry may be adjusted appropriately such that the slurry is supplied into the partition wall inner region on the outflow cell side of the partition wall. Further, the properties, such as the solid content concentration of the slurry and the viscosity of the slurry, may be adjusted appropriately such that the slurry is not supplied into the partition wall inner region on the outflow cell side of the partition wall. The inflow cells may be pressurized from the inflow side to cause a pressure difference between the inflow cells and the outflow cells. As the method for supplying the slurry at least one of into the partition wall inner region on the outflow cell side or onto the partition wall surface on the outflow cell side in the outflow cell side catalyst region of the partition wall, a method in which the slurry is blown off using a blower when supplying the slurry so as not to supply the slurry to parts of in the partition wall inner region and on the partition wall surface, where the catalyst is unnecessary, may be used.

The drying condition and the firing condition in the method of drying and firing the slurry after supplying it to the partition wall are similar to the drying condition and the firing condition used for forming the inflow cell side catalyst.

The properties, such as the thickness and porosity, of the outflow cell side catalyst can be adjusted by, for example, a method of adjusting the mean particle size D50 of the solid contents of the slurry, the solid content concentration of the slurry, the properties of the slurry, the supply amount of the slurry, the drying condition, the firing condition, and the like.

### (2) Others

When the exhaust gas purification device further includes the outflow cell side catalyst, in the exhaust gas purification device, the catalyst metal particles included in the inflow cell side catalyst may contain at least one of platinum (Pt) or palladium (Pd) similarly to the first embodiment, and the catalyst metal particles included in the outflow cell side catalyst may contain rhodium (Rh). This is because since exhaust gas comes into contact with the outflow cell side catalyst after hydrocarbon (HC) contained in the exhaust gas is effectively converted by the catalyst metal particles included in the inflow cell side catalyst, poisoning of rhodium (Rh) contained in the catalyst metal particles included in the outflow cell side catalyst by hydrocarbon (HC) can be suppressed.

### Examples

The following further specifically describes the exhaust gas purification device according to the embodiments using examples and comparative examples.

### [Example 1]

An example of the exhaust gas purification device according to the first embodiment was produced. Specifically, first, a GPF that included a honeycomb substrate 10 and sealing members 16 and was not coated with a catalyst was prepared. Details of the configurations of the honeycomb substrate 10 and the sealing members 16 in the GPF are as follows.

### (Configurations of Honeycomb Substrate and Sealing Members in GPF)

Material of honeycomb substrate: Cordierite
Size of honeycomb substrate: Outer diameter × axial length = 129 mm × 100 mm
Thickness of partition wall: 200 µm
Mean pore size of voids in partition wall: 15 µm
Cell density: 300 per square inch

Next, a carrier with catalyst in which catalyst metal particles were supported on a carrier in powder form was mixed with a solvent, thus preparing a slurry for inflow cell side catalyst. Specifically, alumina (carrier) in powder form was immersed in an aqueous solution containing Pt nitrate (catalytic metal salt), and subsequently, they were dried and fired, thus preparing Pt supporting powder in which Pt was supported on the alumina in powder form. Next, a ceria-zirconia complex oxide (OSC material), barium sulfate (cocatalyst), a binder, and an ion exchanged water were added to the Pt supporting powder, and they were sufficiently stirred and wet-ground. Thus, the slurry for inflow cell side catalyst was prepared.

Next, the slurry for inflow cell side catalyst was poured into the inflow cells 12A from the inflow side ends 12Aa, thereby supplying the slurry for inflow cell side catalyst onto the partition wall surfaces 14SA on the inflow cells 12A side in the inflow cell side catalyst region 14X of the partition wall 14. At this time, the supply amount of the slurry was adjusted such that the density of the inflow cell side catalyst 20 became a desired value. The inflow cell side catalyst region 14X of the partition wall 14 is a region extending from the inflow side end 14a of the partition wall 14 along the extending direction toward the outflow side up to the position 14b apart by a distance of 50% of the length in the extending direction of the partition wall 14. When the slurry was supplied, the slurry was blown off using a blower so as not to unnecessarily supply the slurry to parts in the partition wall inner region and on the partition wall surface, where the catalyst was unnecessary. Subsequently, after the honeycomb substrate 10 supplied with the slurry for inflow cell side catalyst was dried by heating it at 120°C for two hours using a dryer to remove water content, it was fired at 500°C for two hours using an electric furnace. Thus, an inflow cell side catalyst 20 was formed.

Next, a carrier with catalyst in which catalyst metal particles were supported on a carrier in powder form was mixed with a solvent, thus preparing a slurry for outflow cell side catalyst. Specifically, a ceria-zirconia complex oxide (carrier) in powder form was immersed in an aqueous solution containing Rh nitrate (catalytic metal salt), and subsequently, they were dried and fired, thus preparing Rh supporting powder in which Rh was supported on the ceria-zirconia complex oxide in powder form. Next, alumina (cocatalyst), a binder, and an ion exchanged water were added to the Rh supporting powder, and they were sufficiently stirred and wet-ground. Thus, the slurry for outflow cell side catalyst was prepared.

Next, the slurry for outflow cell side catalyst was poured into the outflow cells 12B from the outflow side ends 12Bb, thereby supplying the slurry for outflow cell side catalyst into the partition wall inner region 14NB on the outflow cells 12B side in the outflow cell side catalyst region 14Y of the partition wall 14. The outflow cell side catalyst region 14Y of the partition wall 14 is a region extending from the outflow side end 14d of the partition wall 14 along the extending direction toward the inflow side up to the position 14e apart by a distance of 70% of the length in the extending direction of the partition wall 14. When the slurry was supplied, the slurry was blown off using a blower so as not to unnecessarily supply the slurry to parts on the partition wall surface and in the partition wall inner region, where the catalyst was unnecessary. Subsequently, after the honeycomb substrate 10 supplied with the slurry for outflow cell side catalyst was dried by heating it at 120°C for two hours using a dryer to remove water content, it was fired at 500°C for two hours using an electric furnace. Thus, an outflow cell side catalyst 30 was formed.

As described above, as illustrated in Fig. 2, the exhaust gas purification device 1 including the honeycomb substrate 10, the sealing members 16, the inflow cell side catalyst 20, and the outflow cell side catalyst 30 was produced. The density of the inflow cell side catalyst 20 was 22 g/L.

### [Example 2]

An exhaust gas purification device 1 was produced by a production method similar to that of Example 1, except that when the slurry for inflow cell side catalyst was supplied onto the partition wall surfaces 14SA on the inflow cells 12A side in the inflow cell side catalyst region 14X of the partition wall 14, the density of the inflow cell side catalyst 20 became 43 g/L by adjusting the supply amount of the slurry for inflow cell side catalyst.

### [Comparative Example 1]

An exhaust gas purification device 1 was produced by a production method similar to that of Example 1, except that when the slurry for inflow cell side catalyst was supplied onto the partition wall surfaces 14SA on the inflow cells 12A side in the inflow cell side catalyst region 14X of the partition wall 14, the density of the inflow cell side catalyst 20 became 83 g/L by adjusting the supply amount of the slurry for inflow cell side catalyst.

### [Comparative Example 2]

An exhaust gas purification device 1 was produced by a production method similar to that of Example 1, except that when the slurry for inflow cell side catalyst was supplied onto the partition wall surfaces 14SA on the inflow cells 12A side in the inflow cell side catalyst region 14X of the partition wall 14, the density of the inflow cell side catalyst 20 became 103 g/L by adjusting the supply amount of the slurry for inflow cell side catalyst.

### [Comparative Example 3]

An exhaust gas purification device 1 was produced by a production method similar to that of Example 1, except that when the slurry for inflow cell side catalyst was supplied onto the partition wall surfaces 14SA on the inflow cells 12A side in the inflow cell side catalyst region 14X of the partition wall 14, the density of the inflow cell side catalyst 20 became 15 g/L by adjusting the supply amount of the slurry for inflow cell side catalyst.

### [Evaluation]

For the exhaust gas purification devices produced in Examples 1 and 2 and Comparative Examples 1 to 3, initial pressure loss and exhaust gas purification performance after a durability test with respect to the coverage of the inflow cell side catalyst at a reference position in the extending direction of the partition wall were evaluated.

### (Coverage of Inflow Cell Side Catalyst at Reference Position in Extending Direction of Partition Wall)

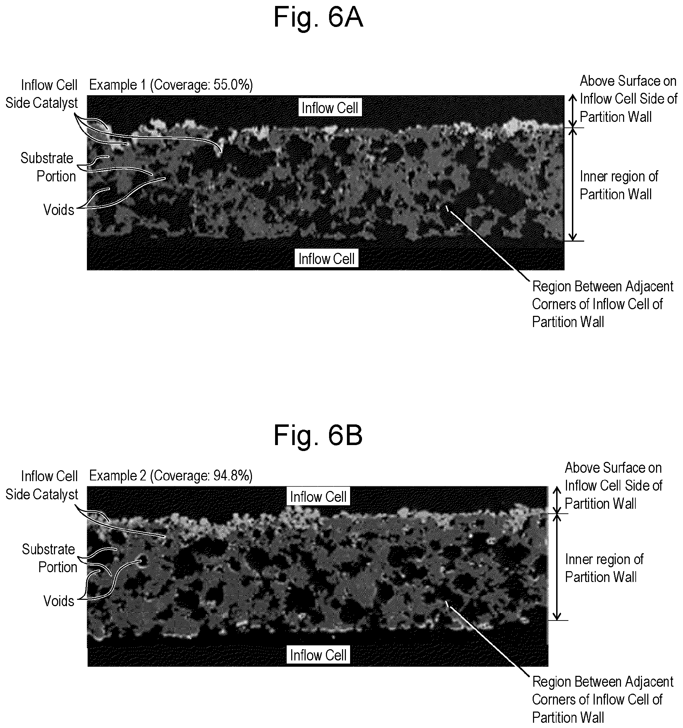

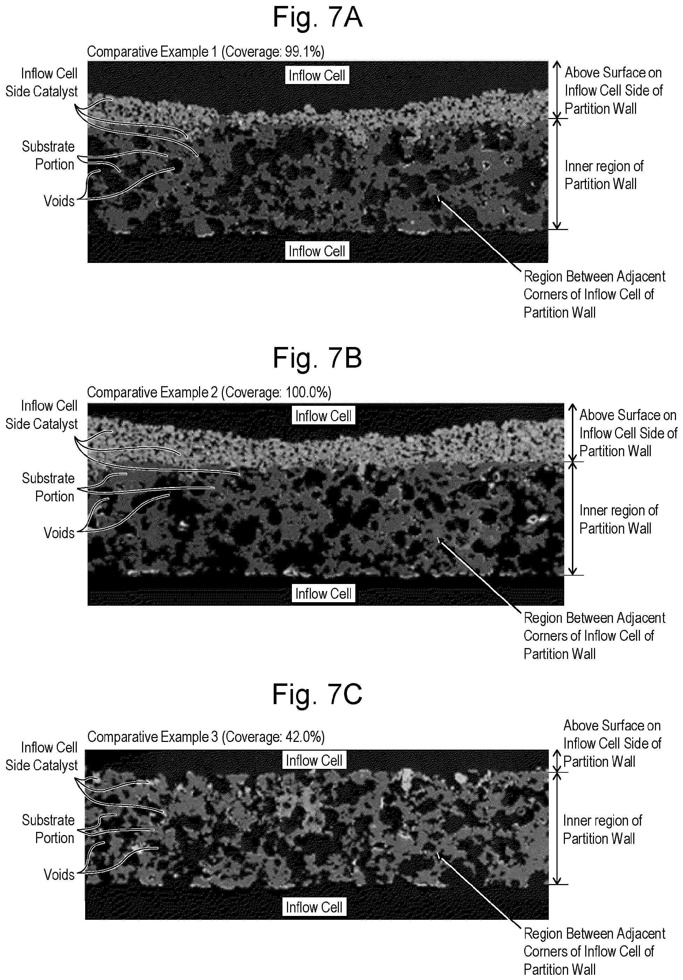

In the exhaust gas purification devices 1 produced in Examples 1 and 2 and Comparative Examples 1 to 3, a position apart from the inflow side end 14a of the partition wall 14 along the extending direction toward the outflow side by a distance of 50% of the length in the extending direction of the inflow cell side catalyst region 14X (25% of the length in the extending direction of the partition wall 14) was set to the reference position 14c (reference position 14c in the extending direction of the partition wall 14). On the cross-sectional surface perpendicular to the extending direction at the reference position 14c in the extending direction of the partition wall 14, the region between adjacent corners of the inflow cell 12A was taken with a scanning electron microscope (SEM). Figs. 6A and 6B are images, taken with the SEM, of the cross-sectional surfaces perpendicular to the extending direction at the reference position in the extending direction of the partition walls in the exhaust gas purification devices of Examples 1 and 2, respectively. Figs. 7A to 7C are images, taken with the SEM, of the cross-sectional surfaces perpendicular to the extending direction at the reference position in the extending direction of the partition walls in the exhaust gas purification devices of Comparative Examples 1 to 3, respectively. Each of these drawings illustrates the partition wall surface on the inflow cell side of the partition wall and the partition wall inner region. Also, the sections of the substrate portion of the partition wall, the voids of the partition wall (portions of the voids unfilled with the catalyst), and the inflow cell side catalyst are illustrated.

In the exhaust gas purification device 1 of each example, using the image taken with the SEM, the proportion of the region on the partition wall 14 covered with the inflow cell side catalyst 20 in a plan view of the partition wall surface 14SA on the inflow cell 12A side of the partition wall 14 at the reference position 14c in the extending direction of the partition wall 14 (hereinafter abbreviated as the "coverage of the inflow cell side catalyst at the reference position in the extending direction of the partition wall") was determined.

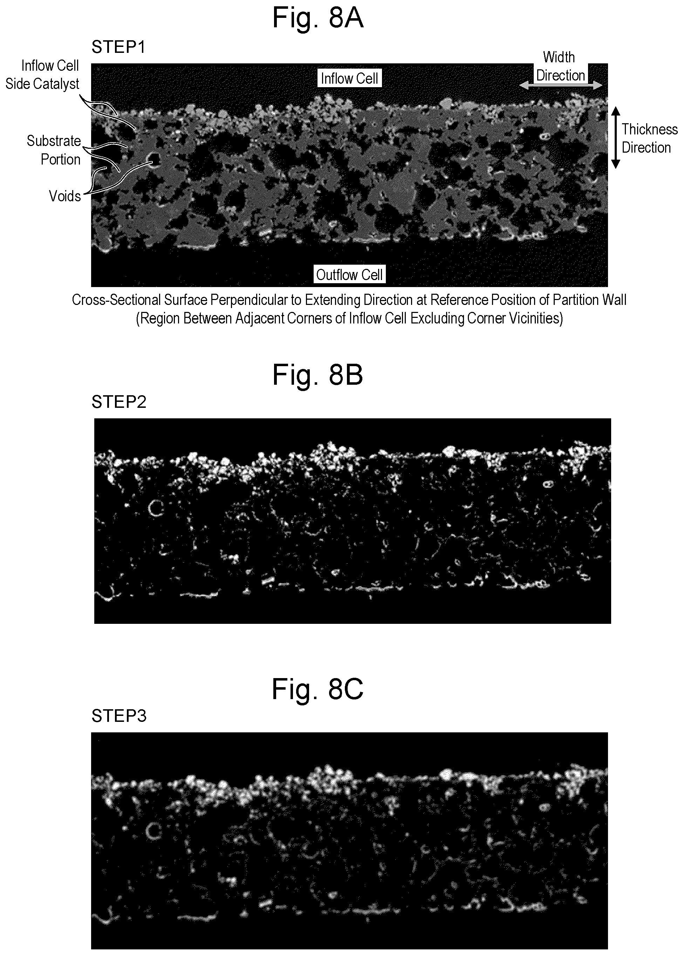

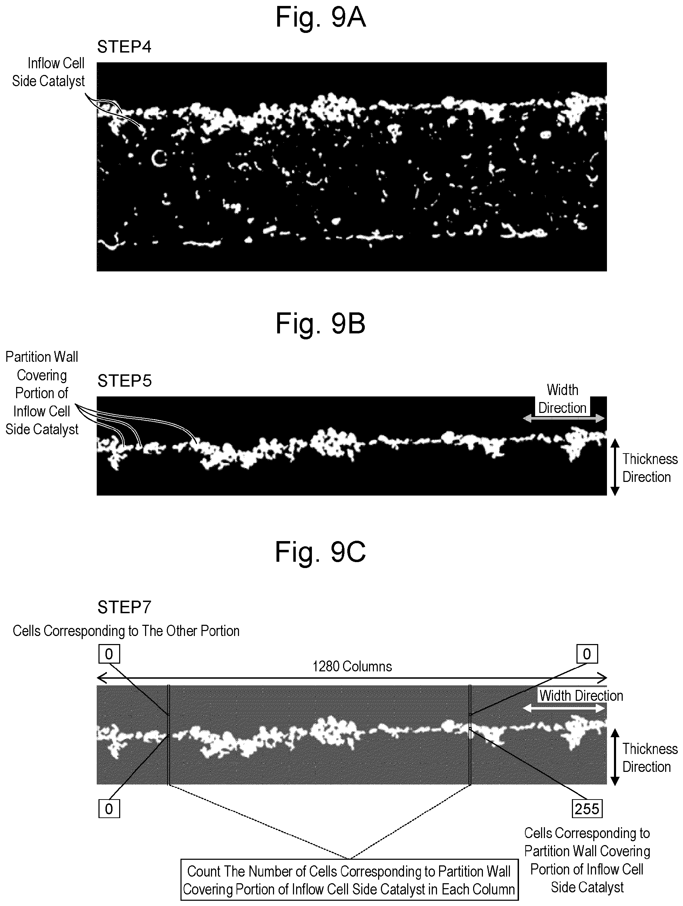

The following describes a procedure for determining the coverage of the inflow cell side catalyst at the reference position in the extending direction of the partition wall. Figs. 8A to 8C and Figs. 9A to 9C are process drawings that schematically describe the procedure for determining the coverage of the inflow cell side catalyst at the reference position in the extending direction of the partition wall. In the process drawings, the procedure is explained using the exhaust gas purification device of Example 2 as an example.

When the coverage of the inflow cell side catalyst 20 at the reference position 14c in the extending direction of the partition wall 14 was determined in the exhaust gas purification device 1 of each example, first, as illustrated in Fig. 8A, an image of the region between adjacent corners of the inflow cell 12A on the cross-sectional surface perpendicular to the extending direction at the reference position 14c in the extending direction of the partition wall 14 was taken with the SEM, as described above, to obtain the taken image (STEP 1). Specifically, an image of the region between the adjacent corners of the inflow cell 12A on the cross-sectional surface of the partition wall 14, which excluded the corner vicinities, was taken at a magnification of 150 times, and the taken image was obtained in an 8-bit format of 1280 × 960 pixels.

Next, as illustrated in Fig. 8B, by using the image processing software ImageJ, after the threshold for binarizing the image was set to a predetermined value using the Threshold menu of ImageJ, the taken image obtained in STEP 1 was tentatively binarized. Accordingly, the region of the taken image was tentatively classified into a region for the inflow cell side catalyst 20 and the other region (region for the substrate portion and void portions of the partition wall 14 and the cells). The region for the inflow cell side catalyst 20 and the other region, which were tentatively classified, were converted to white gradation level and black gradation level, respectively (STEP 2).

Next, as illustrated in Fig. 8C, the Sigma (Radius) value was set to 2.00 by using the Gaussian Blur menu of ImageJ, and the image obtained in STEP 2 was smoothed (STEP 3). As a result, as described later, when selecting a portion continuous from the upper end of the inflow cell side catalyst 20 toward the outflow cell 12B side in the image, erroneously selecting the portion due to noise and the like was suppressed.

Next, as illustrated in Fig. 9A, after the threshold for binarizing the image was set to a predetermined value using the Threshold menu of ImageJ, the image obtained in STEP 3 was binarized once again. Accordingly, the region of the image was classified into the region for the inflow cell side catalyst 20 and the other region once again. The region for the inflow cell side catalyst 20 and the other region, which were classified once again, were converted to white gradation level and black gradation level, respectively (STEP 4).

Next, as illustrated in Fig. 9B, the operation of "area selection and delete/cut" was performed on the image obtained in STEP 4 by using the Delete menu of ImageJ. Accordingly, the portion continuous from the upper end of the inflow cell side catalyst 20 toward the outflow cell 12B side (hereinafter abbreviated as a "partition wall covering portion of the inflow cell side catalyst 20" in some cases) corresponding to the portion of the inflow cell side catalyst 20 that covered the inflow cell 12A side of the partition wall 14 was selected and kept in white gradation level. The other portion of the inflow cell side catalyst 20 was converted to black gradation level, which was the same as the region for the substrate portion of the partition wall and the like (STEP 5).

Next, although not illustrated, the image data obtained in STEP 5 was saved in a text file format by using the Save as Text Image menu of ImageJ (STEP 6). At this time, in response to the fact that the taken image obtained in STEP 1 was in an 8-bit format of 1280 × 960 pixels, the image data in a text file format was numerical data in 1280 columns × 960 rows that represented the white and black gradation levels of the respective pixels of the image obtained in STEP 5 as numerical values. The numerical values representing the white and black gradation levels were "255" and "0," respectively.

Next, as illustrated in Fig. 9C, using Microsoft Excel (registered trademark), the 1280 × 960 pixels of the image obtained in STEP 5 were displayed in cells in 1280 columns × 960 rows by opening the image data in a text file format obtained in STEP 6 in an Excel file format. Subsequently, using the fact that, of the cells in 1280 columns × 960 rows, the cells corresponding to the partition wall covering portion of the inflow cell side catalyst 20 (gradation level: white) had a numerical value of "255," and the cells corresponding to the other portion (gradation level: black) had a numerical value of "0," the number of cells (numerical value: "255") corresponding to the partition wall covering portion of the inflow cell side catalyst (gradation level: white) in each of the 1280 columns was counted (STEP 7). At this time, the calculation was performed in bulk using Excel's VBA.

Next, although not illustrated, from the results obtained in STEP 7, the number of columns out of the 1280 columns, where the number of cells (numerical values: "255") corresponding to the partition wall covering portion of the inflow cell side catalyst (gradation level: white) was 0, was determined. Afterward, by dividing this number of columns by 1280 as the total number of columns, the proportion [%] of the region between adjacent corners of the inflow cell 12A on the cross-sectional surface of the partition wall 14 accounted for by the region uncovered with the inflow cell side catalyst in the width direction was determined (STEP 8).

Next, although not illustrated, by subtracting the proportion [%] accounted for by the region uncovered with the inflow cell side catalyst in the width direction obtained in STEP 8 from the total proportion (100%) in the width direction of the region between the adjacent corners of the inflow cell 12A on the cross-sectional surface of the partition wall 14, the proportion of the region between the adjacent corners of the inflow cell 12A on the cross-sectional surface of the partition wall 14 accounted for by the partition wall covering portion of the inflow cell side catalyst in the width direction was determined (STEP 9) as the coverage of the inflow cell side catalyst at the reference position in the extending direction of the partition wall.

Table 1 below shows the coverage of the inflow cell side catalyst at the reference position in the extending direction of the partition wall for each example determined using the above-described procedure.

### (Initial Pressure Loss)

For the exhaust gas purification devices produced in Examples 1 and 2 and Comparative Examples 1 to 3, initial pressure loss was measured. Specifically, as the initial pressure loss, the pressure loss [kPa] was measured when air was circulated to the exhaust gas purification device of each example at 7 m³/minute and 20°C. Table 1 below shows the initial pressure loss for each example.

### (Exhaust Gas Purification Performance after Durability Test)

For the exhaust gas purification devices produced in Examples 1 and 2 and Comparative Examples 1 to 3, an NOx 80% purification temperature after the durability test was measured as an index of exhaust gas purification performance after the durability test. Specifically, the durability test was conducted by first installing the exhaust gas purification device of each example in the exhaust system of a V8 engine and by repeatedly flowing exhaust gas under each of the stoichiometric and lean atmospheres each for a certain period (a ratio of 3:1) over a period of 50 hours at a catalyst bed temperature of 900°C. Subsequently, the exhaust gas purification device of each example after the durability test was installed in the exhaust system of an L4 engine, exhaust gas with an air-fuel ratio (A/F) of 14.4 was supplied, and an inlet gas temperature was raised from 200°C to 600°C (20°C/minute) under the condition of Ga = 28 g/s. The NOx conversion rate was calculated by measuring the NOx concentration of inlet gas and outlet gas at each inlet gas temperature, and the inlet gas temperature at the time when the NOx was converted by 80% was measured as the NOx 80% purification temperature [°C]. Table 1 below shows the NOx 80% purification temperature for each example.

**[Table 1]**

| | Density of Inflow Cell Side Catalyst [g/L] | Coverage of Inflow Cell Side Catalyst at Reference Position in Extending Direction of Partition Wall [%] | Initial Pressure Loss [kPa] | NOx 80% Purification Temperature [°C] |
|---|---|---|---|---|
| Example 1 | 22 | 55.0 | 2.21 | 319 |
| Example 2 | 43 | 94.8 | 2.57 | 319 |
| Comparative Example 1 | 83 | 99.1 | 2.85 | 318 |
| Comparative Example 2 | 103 | 100.0 | 3.06 | 317 |
| Comparative Example 3 | 15 | 42.0 | 2.11 | 328 |

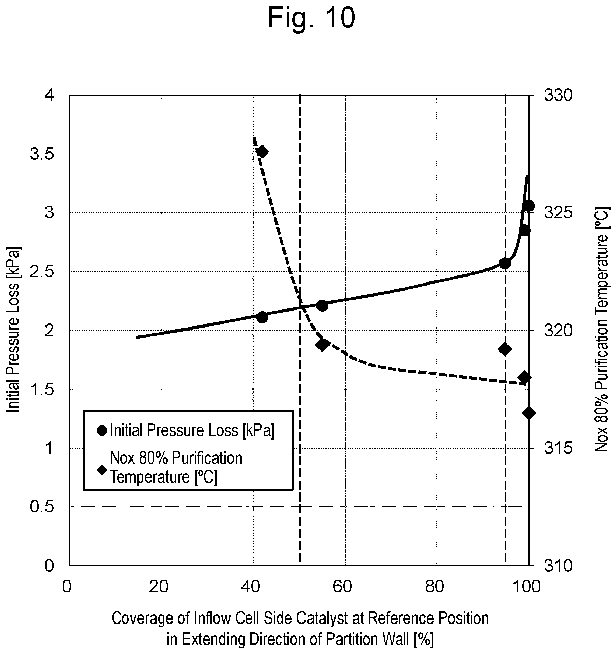

Fig. 10 is a graph illustrating the relationships of the initial pressure loss and the NOx 80% purification temperature to the coverage of the inflow cell side catalyst at the reference position in the extending direction of the partition wall determined for the exhaust gas purification devices of Examples 1 and 2 and Comparative Examples 1 to 3. As illustrated in Table 1 and Fig. 10, the initial pressure loss tends to increase as the coverage of the inflow cell side catalyst at the reference position in the extending direction of the partition wall increases. When the coverage of the inflow cell side catalyst exceeds 95%, the initial pressure loss increases rapidly. On the other hand, the NOx 80% purification temperature tends to decrease as the coverage of the inflow cell side catalyst increases. When the coverage of the inflow cell side catalyst reaches 50% or more, the decrease rate of the NOx 80% purification temperature becomes significantly smaller. From these results, it is conceivable that, with the exhaust gas purification device, when the coverage of the inflow cell side catalyst at the reference position in the extending direction of the partition wall is 50% or more and 95% or less, the increase in pressure loss can be suppressed, and exhaust gas can be sufficiently purified by the inflow cell side catalyst.

While embodiments of the exhaust gas purification device of the present disclosure have been described in detail, the present disclosure is not limited to the above-described embodiments. Various kinds of changes of design are allowed within a range not departing from the spirits of the present disclosure described in the claims.

### Reference Signs List

1 Exhaust gas purification device
10 Honeycomb substrate
10Sa Inflow side end surface
10Sb Outflow side end surface
11 Frame portion
12 Cell
12A Inflow cell
12Aa Inflow side end
12Ab Outflow side end
12B Outflow cell
12Ba Inflow side end
12Bb Outflow side end
14 Partition wall
14a Inflow side end of partition wall
14b Position apart from inflow side end of partition wall along extending direction by predetermined distance
14c Reference position in extending direction of partition wall
14d Outflow side end of partition wall
14e Position apart from outflow side end of partition wall along extending direction by predetermined distance
14X Inflow cell side catalyst region of partition wall
14Y Outflow cell side catalyst region of partition wall
14SA Partition wall surface on inflow cell side of partition wall
14NA Partition wall inner region on inflow cell side of partition wall
14SB Partition wall surface on outflow cell side of partition wall
14NB Partition wall inner region on outflow cell side of partition wall
16 Sealing Member
20 Inflow cell side catalyst
30 Outflow cell side catalyst

All the publications, patents, and patent applications cited in the description are directly incorporated herein as references.

## Claims

1. An exhaust gas purification device comprising:
a honeycomb substrate; and
an inflow cell side catalyst,
wherein the honeycomb substrate includes a porous partition wall defining a plurality of cells extending from an inflow side end surface to an outflow side end surface,
wherein the plurality of cells include an inflow cell and an outflow cell adjacent across the partition wall,
wherein the inflow cell has an open inflow side end and a sealed outflow side end,
wherein the outflow cell has a sealed inflow side end and an open outflow side end,
wherein the inflow cell side catalyst is disposed at least one of on a partition wall surface on the inflow cell side or in a partition wall inner region on the inflow cell side in an inflow cell side catalyst region extending from an inflow side end of the partition wall along an extending direction up to a position apart by a predetermined distance, and
wherein when a position at 50% of a length of the inflow cell side catalyst region from the inflow side end of the partition wall along the extending direction is set to a reference position, at the reference position, a proportion of a region of the partition wall covered with the inflow cell side catalyst in a plan view of the partition wall surface on the inflow cell side of the partition wall is in a range of 50% or more and 95% or less.
